# EUROPÄISCHE PATENTSCHRIFT

(11) **EP 1 440 504 B1**
(45) Veröffentlichungstag und Bekanntmachung des Hinweises auf die Patenterteilung: **21.12.2011**
(21) Anmeldenummer: 02776819.1
(22) Anmeldetag: 14.10.2002
(51) Int. Cl.: H02P 1/18

(54) **SCHALTUNGSANORDNUNG ZUM BETREIBEN EINES ELEKTROMOTORS**
CIRCUIT FOR OPERATING AN ELECTRIC MOTOR
CIRCUIT POUR FAIRE FONCTIONNER UN MOTEUR ELECTRIQUE

(30) Priorität: 23.10.2001 DE 10152170
(43) Veröffentlichungstag der Anmeldung: 28.07.2004
(73) Patentinhaber: ROBERT BOSCH GMBH, 70442 Stuttgart (DE)
(72) Erfinder: KNAB, Norbert, 77767 Appenweier (DE); ASAL, Thomas, 79289 Horben (DE); HABERL, Nikolas, 77886 Lauf (DE)
(86) Internationale Anmeldenummer: PCT/DE2002/003880
(87) Internationale Veröffentlichungsnummer: WO 2003/038986

(56) Entgegenhaltungen:
- DE-A- 10 007 690
- DE-A- 19 744 729
- DE-A- 19 908 007
- JP-A- 63 178 703
- JP-A- 63 178 703
- US-A- 4 541 029
- US-A- 4 541 029

## Beschreibung

### Stand der Technik

Die Erfindung geht aus von einer Schaltungsanordnung zum Betreiben eines Elektromotors nach der Gattung des unabhängigen Anspruchs.

Aus der DE-A 197 44 729 ist eine Schaltungsanordnung für den Anlauf eines Elektromotors bekannt geworden, die den Motorstrom oder die Motorleistung auf einen vorgegebenen Maximalwert begrenzt. Die vorbekannte Schaltungsanordnung enthält einen Timer, der die Begrenzung des Motorstroms oder der Leistung für die vom Timer vorgegebene Zeit, ausgehend vom Startzeitpunkt des Elektromotors, außer Kraft setzt.

Aus der US-A 4 541 029 und der JP-A 63 178703 ist ferner eine Schaltungsanordnung zum Betreiben eines Elektromotors bekannt, die einen Zeitgeber enthält, wobei ein erstes Schaltsignal den Zeitgeber startet und ein Bestromungssignal des Elektromotors auf die vom Zeitgeber vorgegebene Maximalzeit begrenzt ist.

Der Erfindung liegt die Aufgabe zugrunde, eine gegenüber dem Stand der Technik verbesserte Schaltungsanordnung zum Betreiben eines Elektromotors anzugeben, die den Elektromotor vor einer thermischen Überlastung schützt.

Die Erfindung wird durch die im unabhängigen Anspruch angegebenen Merkmale gelöst.

### Vorteile der Erfindung

Bei einem Absinken der Betriebsspannung des Elektromotors kann es vorkommen, dass der Elektromotor nach dem Auftreten des Startsignals zum Bestromen das erforderliche Anlaufmoment nicht mehr aufbringen kann oder während des Laufs stehenbleibt. Der Zeitgeber unterbricht dann nach Ablauf der vorgegebenen Maximalzeit die Bestromung. In Verbindung mit einer Regelung des Motorstroms stimmt dann der Istwert nicht mehr mit dem Sollwert überein. Dies bleibt auch so, wenn die Betriebsspannung ihren Nominalwert wieder aufgenommen hat. Gemäß der Erfindung ist eine Detektionsanordnung vorgesehen, die nach einer Änderung des Sollwertes ein zweites Schaltsignal bereitstellt, das den Zeitgeber ebenfalls startet, so dass bei dem zuvor geschilderten Betriebszustand und bei einer erneuten Änderung des Sollwerts der Elektromotor wieder bestromt werden kann. Die Bestromung des Elektromotors erfolgt auf Grund des zweiten Schaltsignals bei jeder Änderung des Sollwertes zumindest solange, bis entweder der Zeitgeber wieder beim Erreichen der Maximalzeit die Bestromung beendet oder der Positions-Istwert den Positions-Sollwert erreicht hat.

Vorteilhafte Weiterbildungen und Ausgestaltungen der erfindungsgemäßen Schaltungsanordnung ergeben sich aus abhängigen Ansprüchen.

Eine vorteilhafte Ausgestaltung der erfindungsgemäßen Schaltungsanordnung sieht vor, dass eine Änderung des Vorzeichens der Differenz zwischen Soll- und Istwert ein drittes Schaltsignal bereitstellt, das ein Abschalten der Bestromung des Elektromotors bewirkt. Mit dieser Maßnahme ist eine einfache Realisierung des Reglers möglich, der eine Beendigung der Bestromung des Elektromotors ermöglicht wenn die Regelabweichung zu Null wird.

Eine vorteilhafte Ausgestaltung der erfindungsgemäßen Schaltungsanordnung sieht vor, dass der Zeitgeber als retriggerbarer Zeitgeber ausgestaltet ist. Das zweite Schaltsignal, das die Detektionsanordnung nach einer Änderung des Postions-Sollwertes bereitstellt, startet den Zeitgeber unabhängig von einer ggf. bereits abgelaufenen Zeit erneut. Die Maßnahme stellt sicher, dass nach jeder Sollwertänderung die Maximalzeit für die Bestromung des Elektromotors zur Verfügung steht.

Der Elektromotor wird vorteilhaft in einem Verstellantrieb eingesetzt, bei dem der Sollwert einem Positions-Sollwert und der Istwert einem Positions-Istwert entspricht. Ein Beispiel eines Verstellantriebes ist ein Luftklappen-Verstellantrieb, der beispielsweise in einem Kraftfahrzeug angeordnet ist. Der Regler ermöglicht eine stufenlose Positionierung der Luftklappe.

Die Maximalzeit wird in dieser Verwendung derart gewählt, dass der Verstellantrieb den Verstellbereich in allen Betriebszuständen durchfahren kann. Der Zeitgeber kann bei einer Vorzeichenumkehrung der Regelabweichung zurückgesetzt werden.

Weitere vorteilhafte Weiterbildungen und Ausgestaltungen der erfindungsgemäßen Schaltungsanordnung zum Betreiben eines Elektromotors ergeben sich aus weiteren abhängigen Ansprüchen und aus der folgenden Beschreibung.

### Zeichnung

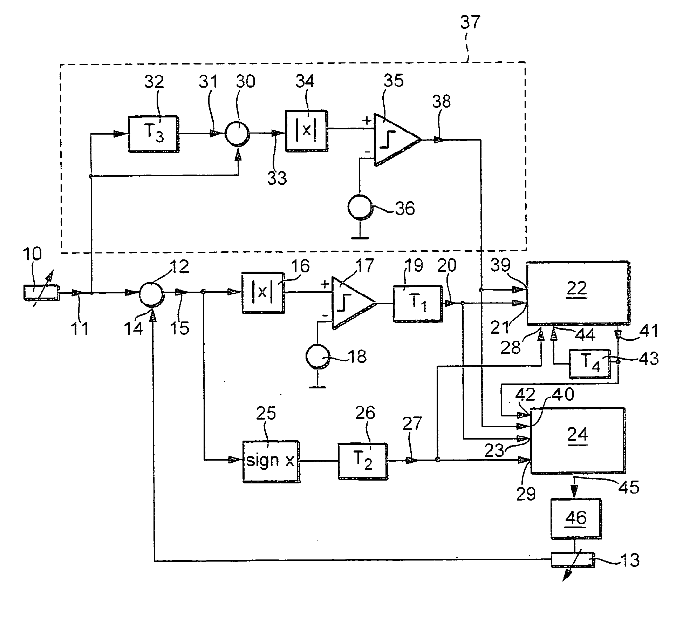

Die Figur zeigt ein Blockschaltbild einer erfindungsgemäßen Schaltungsanordnung zum Betreiben eines Elektromotors.

Ein Sollwertgeber 10 gibt ein Sollwertsignal 11 an einen Differenzbildner 12 ab, der die Differenz zwischen dem Sollwertsignal 11 und einem von einem Istwertgeber 13 bereitgestellten Istwertsignal 14 ermittelt und als erstes Differenzsignal 15 bereitstellt.

Das erste Differenzsignal 15 wird nach Durchlaufen eines ersten Betragsbildners 16 in einem ersten Komparator 17 mit einem ersten Hysteresewert 18 verglichen.

Der erste Komparator 17 stellt nach dem Durchlaufen einer ersten Zeitverzögerung T1 19 ein erstes Schaltsignal 20 bereit, das als Startsignal einem ersten Starteingang 21 eines Zeitgebers 22 und einem ersten Starteingang 23 einer Motorsteuerung 24 zugeführt ist.

Das Differenzsignal 15 gelangt weiterhin nach Durchlaufen eines Nulldurchgangdetektors 25 und einer zweiten Zeitverzögerung T2 26 als Abschaltsignal 27 auf einen ersten Reset-Eingang 28 des Zeitgebers 22 und auf einen ersten Abschalteingang 29 der Motorsteuerung 24.

Das Sollwertsignal 11 gelangt weiterhin an einen zweiten Differenzbildner 30, dem weiterhin ein verzögertes Sollwertsignal 31 zugeführt ist, das aus dem Sollwertsignal 11 nach dem Durchlaufen einer dritten Zeitverzögerung T3 32 gewonnen wird.

Der zweite Differenzbildner 30 stellt ein zweites Differenzsignal 33 bereit, das nach Durchlaufen eines zweiten Betragbildners 34 in einem zweiten Komparator 35 mit einem zweiten Hysteresewert 36 verglichen wird. Die Komponenten 30-36 sind in einer Detektionsanordnung 37 enthalten, die eine Änderung des Sollwertsignales 11 mit dem Bereitstellen eines zweiten Schaltsignals 38 signalisiert.

Das zweite Schaltsignal 38 ist einem zweiten Starteingang 39 des Zeitgebers 22 und einem zweiten Starteingang 40 der Motorsteuerung 24 zugeleitet.

Der Zeitgeber 22 gibt ein zweites Abschaltsignal 41 an einen zweiten Abschalteingang 42 der Motorsteuerung 24 sowie an eine vierte Zeitverzögerung 43 ab. Die vierte Zeitverzögerung 43 gibt das verzögerte zweite Abschaltsignal 41 an einen zweiten Reset-Eingang 44 des Zeitgebers 22 ab.

Die Motorsteuerung 24 gibt ein Bestromungssignal 45 an einen Elektromotor 46 ab, der beispielsweise in einem nicht näher gezeigten Verstellantrieb angeordnet ist, der in dieser Verwendung den Istwertgeber 13 enthält.

Die erfindungsgemäße Schaltungsanordnung zum Betreiben eines Elektromotors 46 arbeitet folgendermaßen:

Der Elektromotor 46 ist in einem Regelkreis enthalten, der versucht, das erste Differenzsignal 15, das die Differenz zwischen dem Sollwertsignal 11 und dem Istwertsignal 14 widerspiegelt, zu Null zu machen. Das Sollwertsignal 11 wird vom Sollwertgeber 10 bereitgestellt und das Istwertsignal 14 gibt der Istwertgeber 13 ab. Falls der Elektromotor in einem nicht näher gezeigten Verstellantrieb angeordnet ist, wird mit dem Sollwertgeber ein Positions-Sollwert vorgegeben, wobei der vorliegende Positions-Istwert vom Istwertgeber 13 bereitgestellt wird.

Das erste Differenzsignal 15 gelangt in den ersten Betragsbildner 16, der das Differenzsignal 15, das sowohl positive als auch negative Signalwerte aufweisen kann, vom Vorzeichen befreit. Der nach dem ersten Betragsbildner 16 angeordnete erste Komparator 17 vergleicht das vom Vorzeichen befreite erste Differenzsignal 15 mit dem ersten Hysteresewert 18. Falls das erste Differenzsignal 15 außerhalb dem vom ersten Hysteresewert 18 vorgegebenen Hysteresegebiet liegt, gibt der erste Komparator 17 nach Durchlaufen der ersten Zeitverzögerung 19 das einem Startsignal entsprechende erste Schaltsignal 20 sowohl an den ersten Starteingang 21 des Zeitgebers 22 als auch an den ersten Starteingang 23 der Motorsteuerung 24 ab. Das erste Schaltsignal 20 am ersten Starteingang 23 der Motorsteuerung 24 führt zum Bereitstellen des Bestromungssignales 45 für den Elektromotor 46. Durch den Betrieb des Elektromotors 46 wird versucht, das Istwertsignal 14 in Übereinstimmung zu bringen mit dem Sollwertsignal 11, so dass das erste Differenzsignal 15 zu Null wird.

Im Falle eines Verstellantriebes betätigt der Elektromotor 46 den Verstellantrieb, so dass sich der Positions-Istwert ändert, der vom Istwertgeber 13 erfasst wird. Sobald das Istwertsignal 14 mit dem vorgegebenen Sollwertsignal 11 übereinstimmt, stellt der Nulldurchgangsdetektor 25 einen Nulldurchgang des ersten Differenzsignales 15 fest und gibt nach dem Durchlaufen der zweiten Zeitverzögerung 26 das erste Abschaltsignal 27 sowohl an den ersten Reset-Eingang 28 des Zeitgebers 22 als auch an den ersten Abschalteingang 29 der Motorsteuerung 24 ab. Die Motorsteuerung 24 nimmt daraufhin das Bestromungssignal 45 zurück und setzt den Elektromotor 46 still. Eine erneute Änderung des Sollwertsignals 11 führt, sofern der erste Hysteresewert 18 überschritten wird, zum erneuten Auftreten des ersten Schaltsignals 20, das die Motorsteuerung 24 wieder zur Ausgabe des Bestromungssignals 45 veranlasst.

Gleichzeitig mit dem Auftreten des ersten Schaltsignals 20 wird der Zeitgeber 22 über den ersten Starteingang 21 gestartet. Der Zeitgeber 22 ist auf eine vorgegebene Maximalzeit Tₘₐₓ eingestellt. Die Maximalzeit Tₘₐₓ ist derart festzulegen, dass der Elektromotor 46 Gelegenheit hat, das Istwertsignal 14 in Übereinstimmung zu bringen mit dem Sollwertsignal 11. Sofern der Elektromotor in einem Verstellantrieb angeordnet ist, wird die Maximalzeit Tₘₐₓ derart festgelegt, dass der Elektromotor 46 bei geringster Betriebsspannung und maximalem Lastmoment den gesamten Verstellbereich des Verstellantriebes durchlaufen kann. Falls der Verstellvorgang innerhalb der Maximalzeit erfolgreich durchgeführt wurde, wird mit dem ersten Schaltsignal 27 der Zeitgeber 22 über den ersten Reset-Eingang 28 zurückgesetzt. Falls dagegen die Maximalzeit Tₘₐₓ abgelaufen ist, gibt der Zeitgeber 22 das zweite Abschaltsignal 41 ab, das der Motorsteuerung 24 über den zweiten Abschalteingang 42 zugeführt wird. Die Motorsteuerung 24 nimmt daraufhin das Bestromungssignal 45 für den Elektromotor 46 zurück.

Das zweite Abschaltsignal 41 wird ggf. über die vierte Zeitverzögerung 43 auf den zweiten Reset-Eingang 44 des Zeitgebers 22 zurückgeführt. Mit dieser Maßnahme wird ein Zurücksetzen des Zeitgebers 22 bewirkt.

Wenn der Elektromotor 46 das Istwertsignal 14 innerhalb der vorgegebenen Maximalzeit Tₘₐₓ nicht in Übereinstimmung mit dem Sollwertsignal 11 bringen kann, nimmt die Motorsteuerung 24 das Bestromungssignal 45 für den Elektromotor 46 zurück. Eine anschließende Änderung des Sollwertsignals mittels des Sollwertgebers 10 in die selbe Richtung, in die keine Übereinstimmung des Istwertsignales 14 mit dem Sollwertsignal 11 erreicht werden konnte, führt zu keinem weiteren Auftreten des ersten Schaltsignals 20, so dass der Elektromotor 46 bei einer derartigen weiteren Sollwertänderung nicht mehr bestromt werden kann.

Um eine weitere Bestromung bei einer Änderung des Sollwertsignals 11 in dieselbe Richtung, die zuvor zur Zurücknahme des Bestromungssignales 45 in Folge des Ablaufs der Maximalzeit Tₘₐₓ geführt hat, sicherzustellen, ist die Detektionsanordnung 37 vorgesehen, die jede Änderung des Sollwertsignals 11 ermittelt und in der Folge das zweite Schaltsignal 38 abgibt.

Eine Änderung des Sollwertsignals 11 kann bspw. durch einen Vergleich des Sollwertsignals 11 mit dem verzögerten Sollwertsignal 31 erfolgen. Das Sollwertsignal 11 wird hierzu in der dritten Zeitverzögerung 32 um einen vorgegebenen Zeitbetrag T3 verzögert. Der zweite Differenzbildner 30 ermittelt die Differenz zwischen dem aktuellen Sollwertsignal 11 und dem zeitverzögerten Sollwertsignal 31 und gibt das zweite Differenzsignal 33 an den zweiten Betragsbildner 34 ab.

Das vom Vorzeichen befreite zweite Differenzsignal 33 vergleicht der zweite Komparator 35 mit dem zweiten Hysteresewert 36 und gibt ggf. das zweite Schaltsignal 38 ab. Der zweite Betragsbildner 34, der zweite Komparator 35 sowie der zweite Hysteresewert 36 sorgen für eine Hysterese, die Schwingungen verhindert.

Das zweite Schaltsignal 38 startet über den zweiten Starteingang 39 den Zeitgeber 22 und veranlasst über den zweiten Starteingang 40 die Motorsteuerung 24 zum Bereitstellen des Bestromungssignals 45 für den Elektromotor 46.

Ein Zurücksetzen bzw. ein erneuter Start des Zeitgebers 22 in einem sogenannten Retrigger-Betrieb des Zeitgebers 22 ermöglicht es, die vom Zeitgeber 22 vorgegebene Maximalzeit Tₘₐₓ nach jeder Änderung des Sollwertsignales 11 mittels des Sollwertgebers 10 in voller Länge zur Verfügung zu stellen, unabhängig vom Betriebszustand vor der Sollwertänderung.

Die erste und zweite Zeitverzögerung 19, 26 ermöglichen ein korrektes Timing der erfindungsgemäßen Schaltungsanordnung durch Kompensation von Signalverzögerungen, die in den einzelnen Funktionsblöcken auftreten. Die vierte Zeitverzögerung 43 zum Verzögern des zweiten Abschaltsignales 41 sorgt dafür, dass das zweite Abschaltsignal 41 beim Auftreten, bedingt durch die Zurückführung auf den zweiten Reset-Eingang 44, nicht sofort wieder unterdrückt wird, so dass der zweite Abschalteingang 42 der Motorsteuerung 24 ein auswertbares zweites Abschaltsignal 41 zur Verfügung steht. Die Zeitvorgaben für die erste und zweite Zeitverzögerung 19, 26 können im Mikrosekunden- oder Millisekundenbereich liegen. Die Zeitvorgabe für die vierte Zeitverzögerung 43 liegt vorzugsweise im Millisekundenbereich. Sofern der Elektromotor 46 in einem Verstellantrieb angeordnet ist, wird die vom Zeitgeber 22 vorgegebene Maximalzeit Tₘₐₓ im Sekundenbereich liegen, der für eine Verstellvorgang unter erschwerten Bedingungen ausreichend ist. Die Zeitvorgabe für die dritte Zeitverzögerung 32 liegt bspw. im Sekundenbereich. Diese Zeitverzögerung ist auf die erwartete Signaländerung des Sollwertsignales 11 abzustimmen, die bei einem manuell betätigten Sollwertgeber 10 bspw. im Sekundenbereich liegt.

Der Nulldurchgangsdetektor 25 kann bspw. mit der Signumfunktion realisiert werden. Bei einem Vorzeichenwechsel des ersten Differenzsignales 15 tritt das erste Abschaltsignal 27 auf, wobei die negativen Signaländerungen am Ausgang des Nulldurchgangsdetektors 25 bspw. in positive Signaländerungen umzuwandeln sind.

## Patentansprüche

1. Schaltungsanordnung zum Betreiben eines Elektromotors (46), die einen Zeitgeber (22) enthält, wobei ein Regler vorgesehen ist, der in Abhängigkeit von einem ersten Differenzsignal (15) zwischen einem Sollwertsignal (11) und einem Istwertsignal (14) ein erstes Schaltsignal (20) bereitstellt, das eine Bestromung des Elektromotors (46) veranlasst, wobei das erste Schaltsignal (20) den Zeitgeber (22) startet und wobei das Bestromungssignal (45) auf die vom Zeitgeber (22) vorgegebene Maximalzeit (Tmax) begrenzt ist, **dadurch gekennzeichnet, dass** eine Detektionsanordnung (37) vorgesehen ist, die eine Änderung des Sollwertsignals (11) feststellt und daraufhin ein zweites Schaltsignal (38) abgibt und dass das zweite Schaltsignal (38) den Zeitgeber (22) startet.

2. Schaltungsanordnung nach Anspruch 1, **dadurch gekennzeichnet, dass** das erste Differenzsignal (15) einem Nulldurchgangsdetektor (25) zugeführt ist, der eine Änderung des Vorzeichens des ersten Differenzsignales (15) feststellt und daraufhin ein erstes Abschaltsignal (27) abgibt, das einerseits den Zeitgeber (22) zurücksetzt und andererseits die Bestromung des Elektromotor (46) beendet.

3. Schaltungsanordnung nach einem der vorhergehenden Ansprüche, **dadurch gekennzeichnet, dass** der Zeitgeber (22) als retriggerbarer Zeitgeber realisiert ist.

4. Schaltungsanordnung nach einem der vorhergehenden Ansprüche, **dadurch gekennzeichnet, dass** ein erster Hysteresewert (18) für das erste Differenzsignal (15) vorgesehen ist.

5. Schaltungsanordnung nach einem der vorhergehenden Ansprüche, **dadurch gekennzeichnet, dass** ein zweiter Hysteresewert (36) für die Änderung des Sollwertsignals (11) vorgesehen ist.

6. Schaltungsanordnung nach einem der vorhergehenden Ansprüche, **dadurch gekennzeichnet, dass** die Detektionsanordnung (37) eine dritte Zeitverzögerung (32) zum Verzögern des Sollwertsignales (11) enthält und dass das zeitverzögerte Sollwertsignal (31) und das Sollwertsignal (11) einem zweiten Differenzbildner (30) zugeführt sind.

7. Schaltungsanordnung nach einem der vorhergehenden Ansprüche, **dadurch gekennzeichnet, dass** der Elektromotor (46) in einem Verstellantrieb angeordnet ist, dass das Sollwertsignal (11) einem Positions-Sollwert und das Istwertsignal (14) einem Positions-Istwert entspricht.

## Claims

1. Circuit arrangement for operating an electric motor (46), which circuit arrangement contains a timer (22), with a controller being provided, the said controller providing a first switching signal (20), which initiates a supply of power to the electric motor (46), as a function of a first difference signal (15) between a setpoint value signal (11) and an actual value signal (14), with the first switching signal (20) starting the timer (22), and with the power supply signal (45) being limited to the maximum time (Tmax) which is predefined by the timer (22), **characterized in that** a detection arrangement (37) is provided, the said detection arrangement detecting a change in the setpoint value signal (11) and, in response, outputting a second switching signal (38), and **in that** the second switching signal (38) starts the timer (22).

2. Circuit arrangement according to Claim 1, **characterized in that** the first difference signal (15) is supplied to a zero-crossing detector (25) which detects a change in the algebraic sign of the first difference signal (15) and, in response, outputs a first switch-off signal (27) which firstly resets the timer (22) and secondly terminates the supply of power to the electric motor (46).

3. Circuit arrangement according to either of the preceding claims, **characterized in that** the timer (22) is realized as a timer which can be retriggered.

4. Circuit arrangement according to one of the preceding claims, **characterized in that** a first hysteresis value (18) is provided for the first difference signal (15).

5. Circuit arrangement according to one of the preceding claims, **characterized in that** a second hysteresis value (36) is provided for the change in the setpoint value signal (11).

6. Circuit arrangement according to one of the preceding claims, **characterized in that** the detection arrangement (37) contains a third time delay (32) for delaying the setpoint value signal (11), and **in that** the time-delayed setpoint value signal (31) and the setpoint value signal (11) are supplied to a second subtractor (30).

7. Circuit arrangement according to one of the preceding claims, **characterized in that** the electric motor (46) is arranged in an adjustment drive, **in that** the setpoint value signal (11) corresponds to a setpoint position value and the actual value signal (14) corresponds to an actual position value.

## Revendications

1. Circuit de conduite d'un moteur électrique (46), le circuit présentant
une horloge (22),
un régulateur qui délivre un premier signal de commutation (20) en fonction d'un premier signal de différence (15) entre un signal (11) de valeur de consigne et un signal (14) de valeur effective,
le premier signal de commutation lançant l'alimentation du moteur électrique (46) en courant,
le premier signal de commutation (20) démarrant l'horloge (22) et le signal (45) d'alimentation en courant étant limité à la durée maximale (Tmax) prédéterminée par l'horloge (22),
**caractérisé en ce que**
un ensemble de détection (37) constate une modification du signal (11) de valeur de consigne et délivre en réponse un deuxième signal de commutation (38) et
**en ce que** le deuxième signal de commutation (38) démarre l'horloge (22).

2. Circuit selon la revendication 1, **caractérisé en ce que** le premier signal de différence (15) est amené à un détecteur (25) de passage par zéro qui constate une modification du signe du premier signal de différence (15) et qui délivre en réponse un premier signal de débranchement (27) qui d'une part réinitialise l'horloge (22) et d'autre part arrête l'alimentation du moteur électrique (46) en courant.

3. Circuit selon l'une des revendications précédentes, **caractérisé en ce que** l'horloge (22) est réalisée sous la forme d'une horloge réactivable.

4. Circuit selon l'une des revendications précédentes, **caractérisé en ce qu'**une première valeur d'hystérèse (18) est prévue pour le premier signal de différence (15).

5. Circuit selon l'une des revendications précédentes, **caractérisé en ce qu'**une deuxième valeur d'hystérèse (36) est prévue pour la modification du signal (11) de valeur de consigne.

6. Circuit selon l'une des revendications précédentes, **caractérisé en ce que** l'ensemble de détection (37) contient un premier retardateur (32) qui retarde le signal (11) de valeur de consigne et **en ce que** le signal (31) de valeur de consigne retardé et le signal (11) de valeur de consigne sont apportés dans un deuxième dispositif (30) de formation de différence.

7. Circuit selon l'une des revendications précédentes, **caractérisé en ce que** le moteur électrique (46) est disposé dans un entraînement d'ajustement et **en ce que** le signal (11) de valeur de consigne correspond à une valeur de consigne de position et le signal (14) de valeur effective à une valeur effective de la position.
